# FASCICULE DE BREVET EUROPEEN

(11) **EP 2 884 608 B1**
(45) Date de publication et mention de la délivrance du brevet: **18.11.2015**
(21) Numéro de dépôt: 14186877.8
(22) Date de dépôt: 29.09.2014
(51) Int. Cl.: H02G 3/04

(54) **ECLISSE MONOBLOC POUR CHEMIN DE CÂBLES EN TREILLIS DE FIL, MUNIE DE LANGUETTES DE MAINTIEN**
VERBINDUNGSLASCHE MIT HALTEZUNGEN FÜR KABELRINNEN AUS DRAHTGITTER.
ONE PIECE SPLICE PLATE FOR WIRE-BASED CABLE TRAYS.

(30) Priorité: 11.12.2013 FR 1362441
(43) Date de publication de la demande: 17.06.2015
(73) Titulaire: Niedax France, 62400 Bethune (FR)
(72) Inventeur: Colmont, Gaetan, 62400 Bethune (FR)
(74) Mandataire: Demulsant, Xavier

(56) Documents cités:
- WO-A1-2013/113953
- FR-A1- 2 971 099

## Description

L'invention a trait au domaine des chemins de câbles, et plus précisément à l'assemblage de dalles de chemins de câbles.

Un chemin de câbles est une structure permettant de supporter des câbles, aussi bien dans une configuration verticale qu'horizontale, notamment des câbles électriques, des câbles téléphoniques, des câbles de fibres optiques, des câbles de réseau informatique. Les chemins de câbles sont généralement réalisés en métal, notamment en acier inoxydable, mais ils peuvent être réalisés en matière plastique ou composite.

Il existe sommairement deux familles de chemins de câbles, à savoir les chemins de câbles en tôle pliée (éventuellement perforée), et les chemins de câbles en treillis de fil.

Les chemins de câbles en treillis de fil sont formés de fils longitudinaux, appelés fils de chaîne, croisés et soudés avec des fils transversaux, appelés fils de trame. Les chemins de câbles peuvent subir un traitement ultérieur, en fonction de l'environnement dans lequel ils sont destinés à être placés. Ainsi, les chemins de câbles métalliques peuvent subir une galvanisation, être plastifiés ou encore revêtus d'une couche de peinture ou de résine (par exemple de résine époxy).

Une technique connue pour l'assemblage de deux dalles de chemins de câbles successifs consiste à utiliser des éclisses.

On connaît de la demande internationale WO 2013/113953 une éclisse se présentant sous forme d'une pièce monobloc à profil général en U et comprenant une âme centrale et deux ailes qui s'étendent de part et d'autre de l'âme sensiblement à angle droit à partir de celle-ci. Cette éclisse est profilée, et présente en section une forme en double gouttière destinée à envelopper des fils de trame d'extrémité de deux dalles de chemin de câbles à assembler. Le positionnement et le maintien de l'éclisse sur les dalles de chemin de câbles sont réalisés au moyen de découpes réalisées dans des rebords en équerre, qui viennent en prise avec des fils de chaîne des dalles.

Cette éclisse présente deux défauts majeurs.

Premièrement, cette éclisse est de fabrication complexe en raison de sa section en double gouttière qui rend délicate les opérations de pliage aux jonctions entre l'âme et les ailes. Pour éviter le craquèlement du matériau à la jonction lors du pliage, on peut choisir un acier à haute limite élastique mais un tel matériau est généralement exclu en raison de son coût, trop élevé.

Deuxièmement, cette éclisse exige des tolérances de fabrication strictes pour les treillis de fil. En effet, un diamètre de fil trop faible entraîne un jeu lors de l'assemblage, et le maintien des dalles par l'éclisse est alors insuffisamment rigide. A contrario, un diamètre de fil trop grand empêche le montage de l'éclisse dont les gouttières ne peuvent venir s'emboîter sur les fils.

Un premier objectif est de proposer une éclisse qui puisse être montée sans outil, et sans pièce supplémentaire.

Un deuxième objectif est de proposer une éclisse dont la fabrication soit simple.

Un troisième objectif est de proposer une éclisse permettant des tolérances de fabrication suffisamment souples pour les treillis de fil.

Un quatrième objectif est de proposer une éclisse assurant un maintien suffisamment rigide des dalles de treillis de fil.

A cet effet, il est proposé, en premier lieu, une éclisse pour l'assemblage d'une première dalle et d'une deuxième dalle de chemin de câbles en treillis de fil, cette éclisse se présentant sous forme d'une pièce monobloc à profil général en U et comprenant :
- une âme centrale munie d'une paroi centrale plate ayant une face interne et une face externe, et de deux rebords transversaux qui longent la paroi centrale de part et d'autre de celle-ci, ces rebords transversaux étant repliés à l'équerre du côté de la face externe de la paroi centrale, l'âme centrale étant pourvue d'une languette centrale qui s'étend en saillie à partir de la paroi centrale, du côté de sa face externe, cette languette centrale étant apte à venir en prise avec une section centrale d'un fil de trame d'extrémité d'une dalle de chemin de câble
- deux ailes qui s'étendent de part et d'autre de l'âme sensiblement à angle droit à partir de celle-ci, chaque aile étant munie d'une paroi latérale plate ayant une face interne et une face externe, et de deux rebords latéraux qui longent la paroi latérale de part et d'autre de celle-ci, ces rebords latéraux étant repliés à l'équerre du côte de la face externe de la paroi latérale, chaque aile étant pourvue d'une languette latérale qui s'étend en saillie à partir de la paroi latérale, du côté de sa face externe, cette languette latérale étant apte à venir en prise avec une section latérale du fil de trame d'extrémité.

Cette éclisse est simple de fabrication ; le caractère plat de ses parois permet sa mise en volume par pliage sans difficulté particulière. Les languettes procurent en outre un bon maintien des fils de trame, tout en permettant une tolérance de fabrication de ceux-ci assez large.

Diverses caractéristiques supplémentaires peuvent être prévues, seules ou en combinaison :
- l'âme centrale est pourvue d'une ouverture centrale pratiquée dans la paroi centrale et ayant un bord latéral à partir duquel la languette centrale fait saillie ;
- l'ouverture centrale présente deux bords latéraux à partir de chacun desquels une languette centrale fait saillie ;
- chaque aile est pourvue d'une ouverture latérale pratiquée dans la paroi latérale et ayant un bord longitudinal à partir duquel la languette latérale fait saillie ;
- l'ouverture latérale présente un bord longitudinal supérieur situé à proximité d'une extrémité libre de l'aile, et un bord longitudinal inférieur à partir duquel la languette latérale fait saillie ;
- chaque rebord transversal définit deux encoches centrales, chacune apte à venir en prise avec un fil de chaîne de fond d'une dalle de chemin de câbles ;
- chaque rebord latéral définit une encoche latérale apte à venir en prise avec un fil de chaîne de côté d'une dalle de chemin de câbles ;
- chaque rebord latéral présente un chant qui s'étend obliquement à partir de l'encoche latérale jusqu'à proximité d'une jonction entre l'aile et l'âme ;
- les rebords transversaux et les rebords latéraux se raccordent de manière continue à une jonction entre l'aile et l'âme.

Il est proposé, en second lieu, un chemin de câbles comprenant au moins une paire de dalles en treillis de fil, assemblées au moyen d'une éclisse telle que présentée ci-dessus.

D'autres objets et avantages de l'invention apparaîtront à la lumière de la description d'un mode de réalisation, faite ci-après en référence aux dessins annexés dans lesquels :
- la figure 1 est une vue en perspective montrant un chemin de câbles comprenant deux dalles en treillis de fil assemblés au moyen d'une éclisse ;
- la figure 2 est une vue en perspective de l'éclisse, avec deux médaillons de détail centrés sur des parties remarquables de l'éclisse ;
- la figure 3 est une vue en coupe transversale partielle de l'éclisse, avec trois médaillons de détail centrés sur des parties remarquables de l'éclisse ;
- les figures 4, 5 et 6 sont des vues en section selon les plans de coupe IV-IV, V-V et VI-VI de la figure 3 ;
- la figure 7 est une vue en perspective illustrant l'assemblage du chemin de câbles ;
- les figures 8 et 9 sont des vues de détail de côté illustrant le montage de l'éclisse ;
- la figure 10 est une vue de détail de côté montrant l'éclisse montée sur une dalle de chemin de câbles ;
- la figure 11 est une vue de détail en perspective, en coupe transversale, montrant l'éclisse montée sur une dalle de chemin de câbles, avec des médaillons de détail centrés sur des parties remarquables de l'éclisse ;
- la figure 12 est une vue en perspective de dessous montrant le chemin de câbles de la figure 1, dans lequel les deux dalles sont assemblées au moyen de l'éclisse.

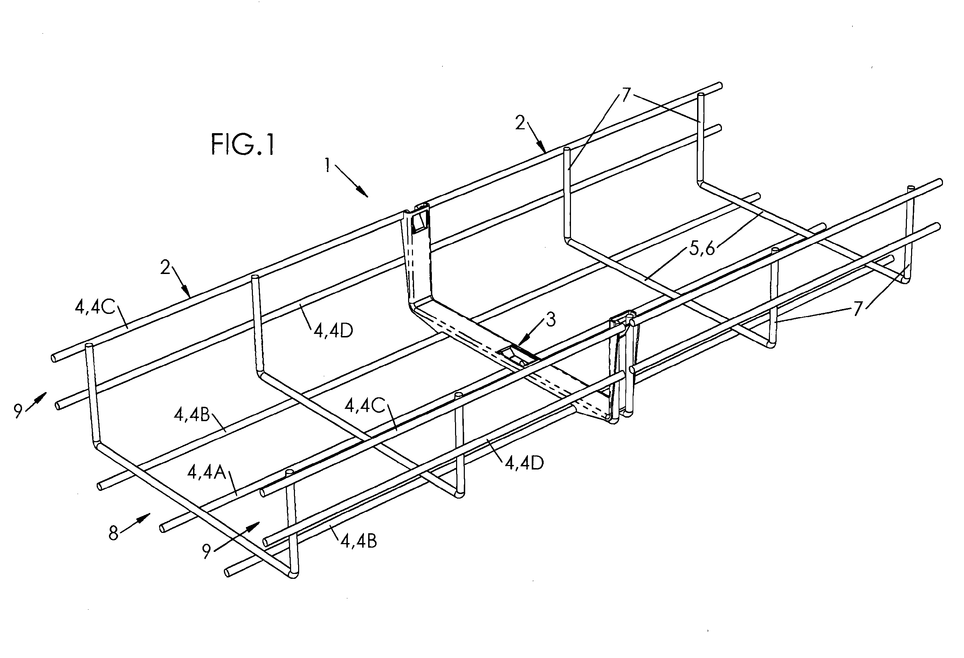

Sur la figure **1** est représenté un chemin **1** de câbles comprenant au moins une paire de dalles **2** en treillis de fil, assemblées au moyen d'une éclisse **3** rapportée. Chaque dalle **2** est formée par soudure de fils **4** de chaîne, qui définissent une direction longitudinale, et de fils **5** de trame, qui s'étendent perpendiculairement aux fils **4** de chaîne et définissent une direction transversale. Chaque fil **5** de trame présente une section **6** centrale et deux sections **7** latérales repliées à angle droit par rapport à la section **6** centrale, de part et d'autre de celle-ci. Pour chaque dalle **2,** les sections **6** centrales des fils **5** de trame définissent ensemble un fond **8,** et les sections **7** latérales définissent des côtés **9.**

Dans l'exemple illustré, les fils **4** de chaîne sont au nombre de sept et comprennent :
- un fil **4A** central de fond, qui s'étend sensiblement au milieu du fond **8,**
- deux fils **4B** latéraux de fond, qui s'étendent sur le fond **8** de part et d'autre du fil **4A** de chaîne central,
- deux fils **4C** de rive, qui définissent des bords supérieurs des côtés,
- deux fils **4D** de côté, qui s'étendent sur les côtés **9** sous les fils **4C** de rive.

Les fils **4** de chaîne sont tous arasés au droit d'un fil **5E** de trame d'extrémité, qui définit une extrémité longitudinale de chaque dalle **2.** De même, les sections **7** latérales sont arasées au droit des fils **4C** de rive.

Le diamètre des fils **4, 5** est conforme aux normes en vigueur. Selon un mode particulier de réalisation, ce diamètre est de 4 mm, avec une tolérance de fabrication de ± 0,2 mm.

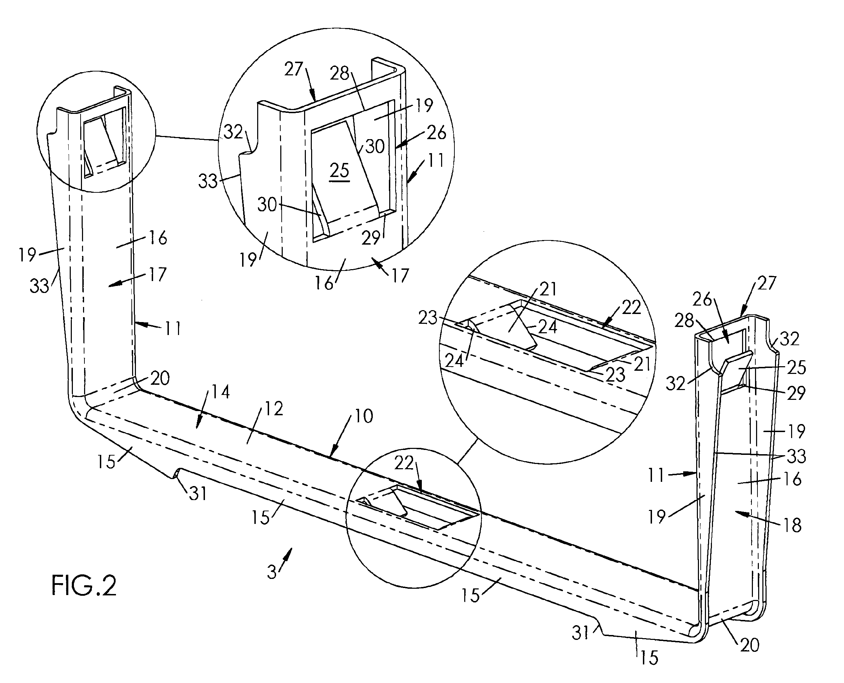

L'éclisse **3** est bien visible sur la figure 2. L'éclisse **3** se présente sous forme d'une pièce monobloc à profil général en U. L'éclisse **3** est de préférence réalisée en métal (par exemple en acier). Elle comprend une âme **10** centrale et deux ailes **11** qui s'étendent latéralement de part et d'autre de l'âme **10,** sensiblement à angle droit à partir de celle-ci.

L'âme **10** comprend une paroi **12** centrale plate qui, lorsque l'éclisse **3** est montée, s'étend transversalement, parallèlement au fond **8** d'une dalle **2.** La paroi **12** centrale présente une face **13** externe qui, lorsque l'éclisse **3** est montée, s'étend en regard du fond **8,** et une face **14** interne opposée. L'âme **10** comprend en outre deux rebords **15** transversaux qui longent la paroi **12** centrale de part et d'autre de celle-ci. Ces rebords **15** transversaux sont repliés à l'équerre du côté de la face **13** externe de la paroi **12** centrale.

Chaque aile **11** comprend une paroi **16** latérale plate ayant une face **17** interne tournée vers l'intérieur de l'éclisse **3** (et qui s'étend dans le prolongement de la face **14** interne de la paroi **12** centrale) et une face **18** externe opposée (qui s'étend dans le prolongement de la face **13** externe de la paroi **12** centrale), et deux rebords **19** latéraux qui longent la paroi **16** latérale de part et d'autre de celle-ci. Comme on le voit sur la figure 2, ces rebords **19** latéraux sont repliés à l'équerre par rapport à la paroi **16** latérale, du côte de la face **18** externe de celle-ci.

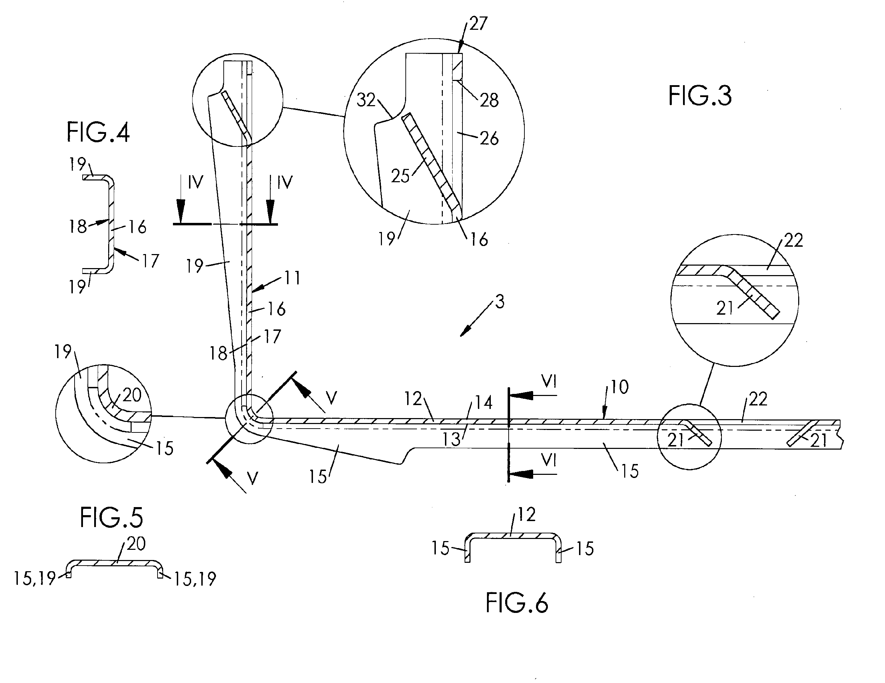

Comme on le voit bien sur la figure 3, les rebords **15** transversaux et les rebords **19** latéraux se raccordent de manière continue à une jonction **20** entre l'aile **11** et l'âme **10.** Comme l'illustrent les figures 4, 5 et 6, l'éclisse **3** présente en tout point une section longitudinale en U, y compris à la jonction **20** entre l'âme **10** et les ailes **11** (figure 5). Il en résulte une excellente rigidité de l'éclisse **3,** et en particulier une bonne tenue des ailes **11** en flexion par rapport à l'âme **10,** grâce à la rigidité de la jonction **20.**

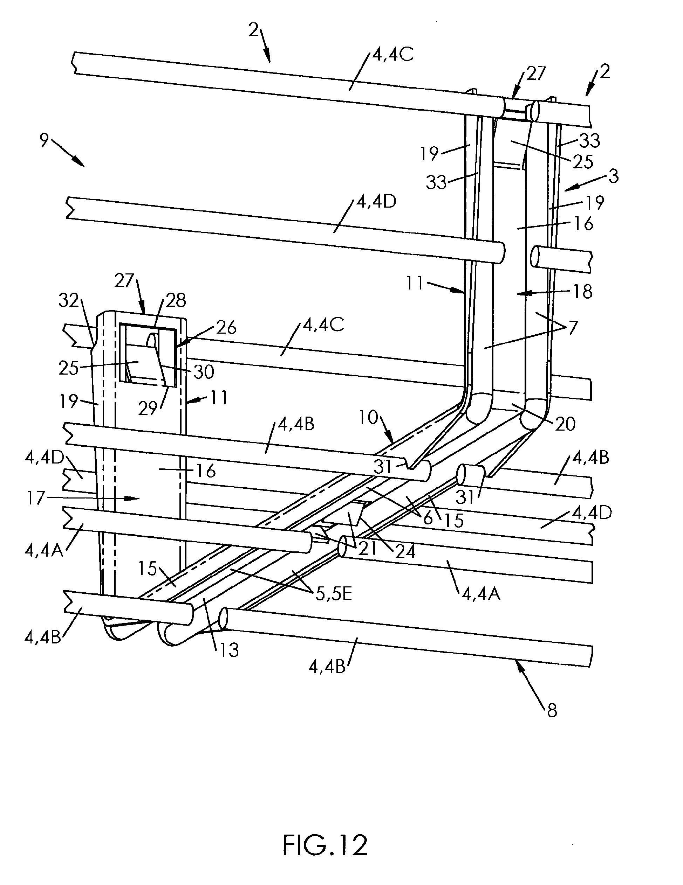

L'âme **10** est pourvue d'au moins une languette **21** centrale qui s'étend en saillie à partir de la paroi **12** centrale, du côté de sa face **13** externe, cette languette **21** centrale étant apte à venir en prise avec la section **6** centrale du fil **5E** de trame d'extrémité d'une dalle **2.** Plus précisément, et comme cela est illustré sur les figures 2, 3, 11 et 12, l'âme **10** est pourvue d'une paire de languettes **21** centrales symétriques par rapport à un plan longitudinal de symétrie générale de l'éclisse **3.**

Selon un mode préféré de réalisation permettant une fabrication aisée de l'éclisse **3,** l'âme **10** est pourvue d'une ouverture **22** centrale pratiquée dans la paroi **12** centrale, sensiblement au centre de celle-ci. Cette ouverture **22** centrale est délimitée latéralement par deux bords **23** latéraux, à partir de chacun desquels une languette **21** centrale fait saillie. Comme on le voit sur le médaillon de détail à droite sur la figure 3, chaque languette **21** centrale est inclinée par rapport à la paroi **12** centrale, par exemple d'un angle de 45° environ.

La (ou chaque) languette **21** centrale est délimitée longitudinalement par une paire de chants **24** qui s'étendent en regard des rebords **15** transversaux, à une distance de ceux-ci égale ou légèrement supérieure (à quelques dixièmes de mm près) au diamètre des fils **5E** de trame d'extrémité (soit environ 4 mm dans l'exemple évoqué ci-dessus).

De même, chaque aile **11** est pourvue d'une languette **25** latérale qui s'étend en saillie à partir de la paroi **16** latérale, du côté de sa face **18** externe, cette languette **25** latérale étant apte à venir en prise avec la section **7** latérale du fil **5E** de trame d'extrémité.

Selon un mode préféré de réalisation particulièrement visible dans les cercles de détail en haut sur les figures 2 et 3, chaque aile **11** est pourvue d'une ouverture **26** latérale pratiquée dans la paroi **16** latérale, au voisinage d'une extrémité **27** libre de l'aile **11.** La languette **25** latérale fait saillie à partir d'un bord longitudinal de cette ouverture **26.** Plus précisément, dans l'exemple illustré, l'ouverture **26** latérale présente un bord **28** longitudinal supérieur, situé à proximité de l'extrémité **27** libre de l'aile **11,** et un bord **29** longitudinal inférieur, à partir duquel la languette **25** latérale fait saillie.

Chaque languette **25** latérale est délimitée longitudinalement par une paire de chants **30** qui s'étendent en regard des rebords **19** latéraux, à une distance de ceux-ci légèrement supérieure au diamètre des fils **5E** de trame d'extrémité (soit environ 4 mm dans l'exemple évoqué ci-dessus).

Par ailleurs, comme on le voit sur les figures, et plus particulièrement sur les figures 2, 3, 8, 9 et 10, chaque rebord **15** transversal définit deux encoches **31** centrales, chacune apte à venir en prise avec un fil **4B** latéral de fond d'une dalle **2.**

De même, comme on le voit sur ces mêmes figures, chaque rebord **19** latéral définit de préférence une encoche **32** latérale apte à venir en prise avec un fil **4C** de rive de la dalle **2.** Selon un mode particulier de réalisation, la hauteur de chaque aile **11** correspond sensiblement à la hauteur des côtés **9** de la dalle **2,** et l'encoche **32** latérale est pratiquée dans le rebord **19** latéral au voisinage de l'extrémité **27** libre de l'aile **11.**

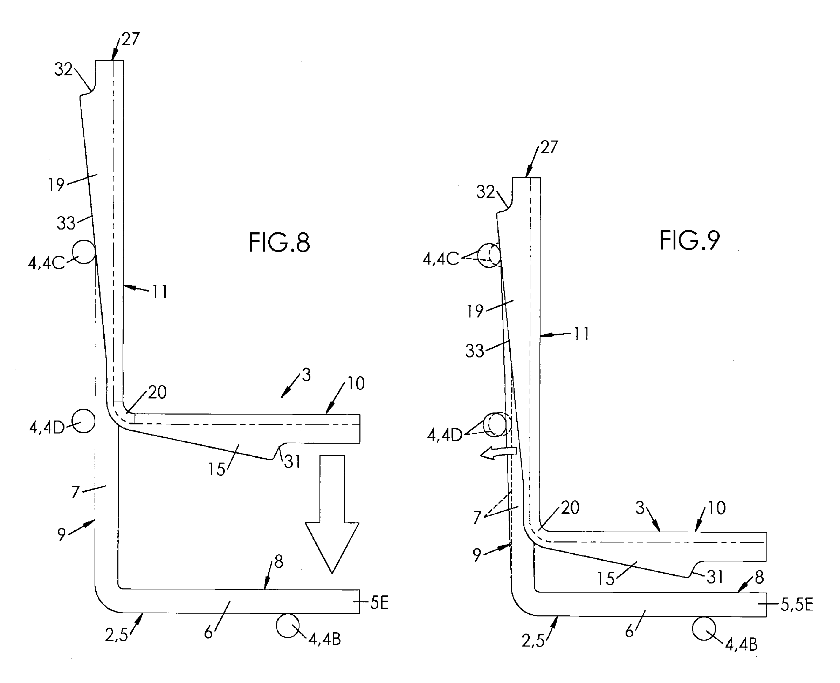

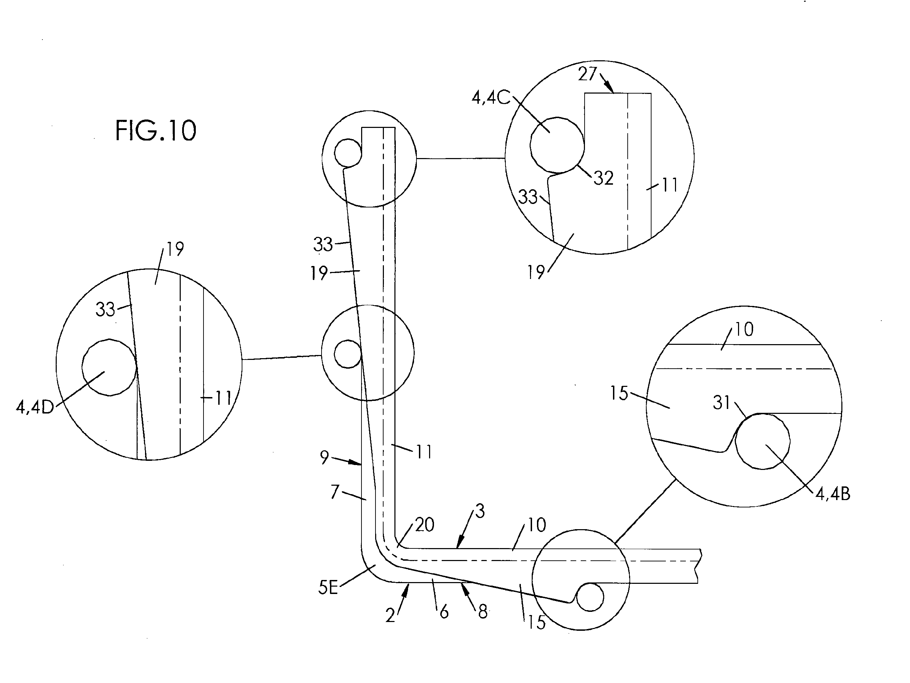

Selon un exemple de réalisation illustré sur les figures (et en particulier sur les figures 8 et 9), chaque rebord **19** latéral présente un chant **33** qui s'étend obliquement à partir de l'encoche **32** latérale jusqu'à proximité de la jonction **20** entre l'aile **11** et l'âme **10.** Ce chant **33** forme un chemin de came qui, lorsque l'éclisse **3** est emboîtée sur une dalle **2** (dans le sens de la flèche de la figure 8), provoque l'écartement (par flexion) des côtés **9** de la dalle **2** par glissement du chant **33** sur le fil **4C** de rive (comme illustré sur la figure 9 sur laquelle on a représenté en trait plein le côté **9** de la dalle **2** ainsi fléchie, et en trait pointillé le côté **9** de la dalle **2** dans sa position initiale non fléchie ; la flèche courbe signale la flexion du côté **9**) avant que le fil **4C** de rive ne vienne s'encliqueter dans l'encoche **32** latérale (figure 10), ce qui provoque le retour du côté **9** de la dalle **2** dans sa position initiale non fléchie.

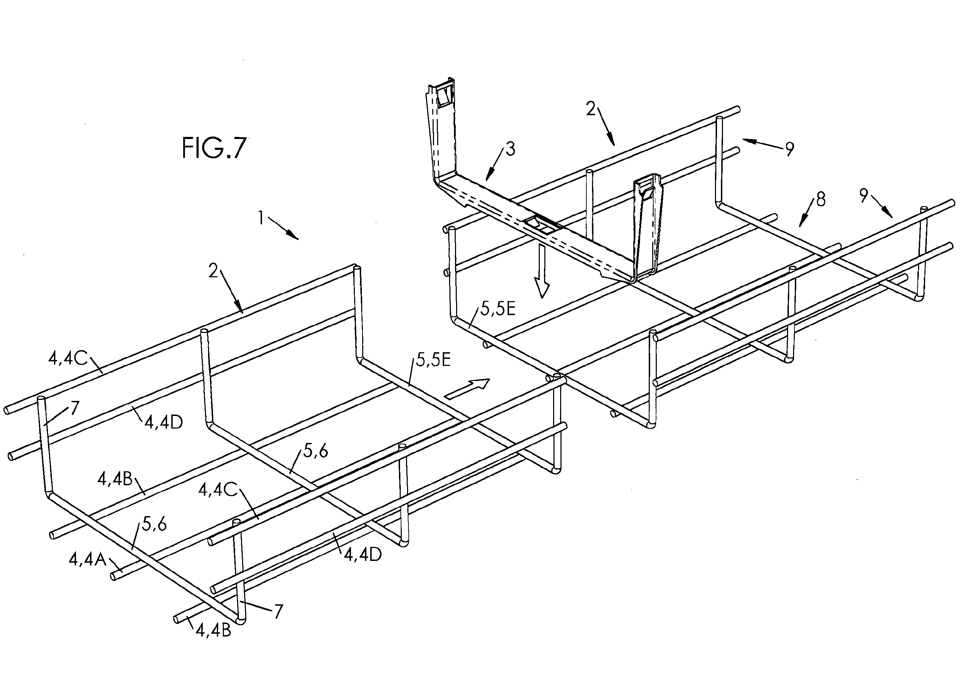

Pour assembler deux dalles **2** de chemin de câbles, plusieurs techniques sont possibles. Une première technique, illustrée sur la figure 7, consiste à prémonter d'abord l'éclisse **3** sur l'une des dalles **2** en l'emboîtant à l'extrémité de celle-ci (comme l'indique la flèche sur la figure 7), puis à rapporter l'autre dalle **2** en emboîtant sur celle-ci l'éclisse **3** déjà prémontée. Une deuxième technique consiste à abouter d'abord les dalles **2** en faisant coïncider leurs extrémités, puis à monter l'éclisse **2** conjointement à cheval sur les extrémités jointives des dalles **2** ainsi aboutées.

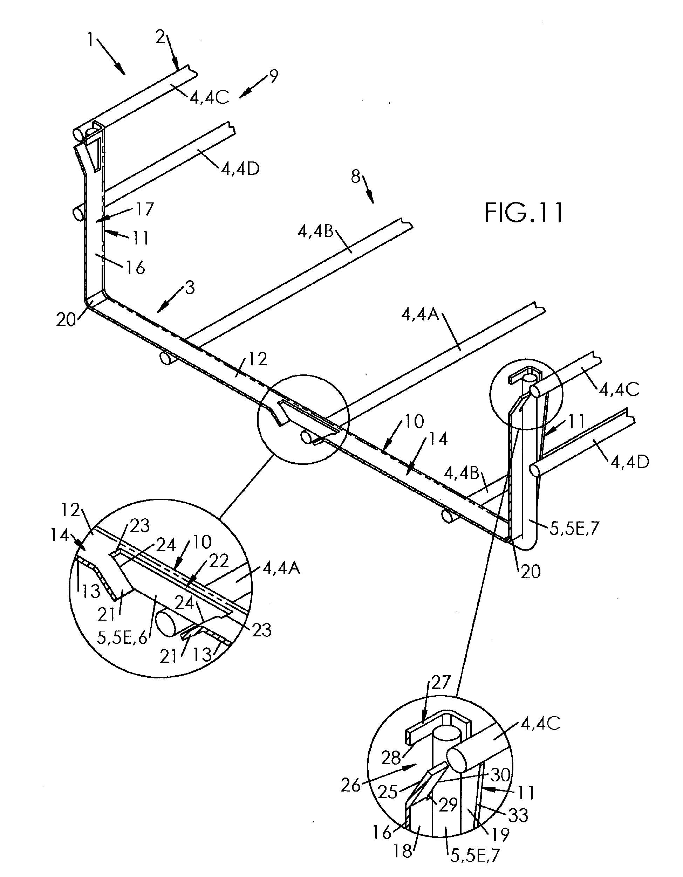

La fixation de l'éclisse **3** se fait :
- premièrement, par encliquetage du fil **4C** de rive dans l'encoche **32** latérale correspondante et emboîtement des fils **4B** de chaîne latéraux dans les encoches **31** centrales correspondantes (figure 10),
- deuxièmement, par emboîtement du fil **5E** de trame d'extrémité entre le rebord **15** transversal et les rebords **19** latéraux d'une part, et les chants **24, 30** des languettes **21, 25** en regard d'autre part (figure 11).

La largeur (mesurée longitudinalement) des languettes **21, 25** définit l'écartement entre les extrémités aboutées des dalles **2.** Lorsqu'elle est réalisée dans un matériau métallique, l'éclisse **3** assure la continuité électrique entre les dalles **2,** sans recours à des pièces spécifiques.

L'éclisse **3** qui vient d'être décrite présente procure plusieurs avantages.

Premièrement, cette éclisse **3** peut être montée directement, à la main, sans outil, et sans pièce supplémentaire destinée à assurer le maintien de l'éclisse **3** et/ou la continuité électrique du chemin **1** de câbles.

Deuxièmement, cette éclisse **3** est de fabrication relativement simple. Elle peut notamment être fabriquée par profilage puis par découpage ou emboutissage. La planéité des parois **12, 16** autorise une mise en volume de l'éclisse **3** relativement aisée.

Troisièmement, cette éclisse **3** permet des tolérances de fabrication assez souples pour les treillis de fil. Le cas échéant, il suffit d'effectuer de modestes réglages sur les machines de découpage pour faire varier la distance entre les chants **24, 30** des languettes **21, 25** et les rebords **15, 19** pour permettre soit un maintien plus rigide sur les fils **5E** de trame d'extrémité, soit au contraire un maintien relativement plus lâche.

## Revendications

1. Eclisse **(3)** pour l'assemblage d'une première dalle **(2)** et d'une deuxième dalle **(2)** de chemin de câbles en treillis de fil, cette éclisse **(3)** se présentant sous forme d'une pièce monobloc à profil général en U et comprenant :
- une âme **(10)** centrale munie d'une paroi **(12)** centrale ayant une face **(14)** interne et une face **(13)** externe, et de deux rebords **(15)** transversaux qui longent la paroi **(12)** centrale de part et d'autre de celle-ci, ces rebords **(15)** transversaux étant repliés à l'équerre du côté de la face **(13)** externe de la paroi **(12)** centrale,
- deux ailes **(11)** qui s'étendent de part et d'autre de l'âme **(10)** sensiblement à angle droit à partir de celle-ci, chaque aile **(11)** étant munie d'une paroi **(16)** latérale ayant une face **(17)** interne et une face **(18)** externe, et de deux rebords **(19)** latéraux qui longent la paroi **(16)** latérale de part et d'autre de celle-ci, ces rebords **(19)** latéraux étant repliés à l'équerre du côte de la face **(18)** externe de la paroi **(16)** latérale,
cette éclisse **(3)** étant **caractérisée en ce que** :
- la paroi **(12)** centrale et les parois **(16)** latérales sont plates ;
- l'âme **(10)** centrale est pourvue d'une languette **(21)** centrale qui s'étend en saillie à partir de la paroi **(12)** centrale, du côté de sa face **(13)** externe, cette languette **(21)** centrale étant apte à venir en prise avec une section **(6)** centrale d'un fil **(5E)** de trame d'extrémité d'une dalle **(2)** de chemin de câbles ;
- chaque aile **(11)** est pourvue d'une languette **(25)** latérale qui s'étend en saillie à partir de la paroi **(16)** latérale, du côté de sa face **(18)** externe, cette languette **(25)** latérale étant apte à venir en prise avec une section **(7)** latérale du fil **(5E)** de trame d'extrémité.

2. Eclisse **(3)** selon la revendication 1, **caractérisée en ce que** l'âme **(10)** centrale est pourvue d'une ouverture **(22)** centrale pratiquée dans la paroi **(12)** centrale et ayant un bord **(23)** latéral à partir duquel la languette **(21)** centrale fait saillie.

3. Eclisse **(3)** selon la revendication 2, **caractérisée en ce que** l'ouverture **(22)** centrale présente deux bords **(23)** latéraux à partir de chacun desquels une languette **(21)** centrale fait saillie.

4. Eclisse **(3)** selon l'une des revendications précédentes, **caractérisée en ce que** chaque aile **(11)** est pourvue d'une ouverture **(25)** latérale pratiquée dans la paroi **(16)** latérale et ayant un bord **(29)** longitudinal à partir duquel la languette **(25)** latérale fait saillie.

5. Eclisse **(3)** selon la revendication 4, **caractérisée en ce que** l'ouverture **(25)** latérale présente un bord **(28)** longitudinal supérieur situé à proximité d'une extrémité **(27)** libre de l'aile **(11),** et un bord **(29)** longitudinal inférieur à partir duquel la languette **(25)** latérale fait saillie.

6. Eclisse **(3)** selon l'une des revendications précédentes, **caractérisée en ce que** chaque rebord **(15)** transversal définit deux encoches **(31)** centrales, chacune apte à venir en prise avec un fil **(4B)** de chaîne de fond d'une dalle **(2)** de chemin de câbles.

7. Eclisse **(3)** selon l'une des revendications précédentes, **caractérisée en ce que** chaque rebord **(19)** latéral définit une encoche **(32)** latérale apte à venir en prise avec un fil **(4D)** de chaîne de côté d'une dalle **(2)** de chemin de câbles.

8. Eclisse **(3)** selon la revendication 7, **caractérisée en ce que** chaque rebord **(19)** latéral présente un chant **(33)** qui s'étend obliquement à partir de l'encoche **(32)** latérale jusqu'à proximité d'une jonction **(20)** entre l'aile **(11)** et l'âme **(10).**

9. Eclisse **(3)** selon l'une des revendications précédentes, **caractérisée en ce que** les rebords **(15)** transversaux et les rebords **(19)** latéraux se raccordent de manière continue à une jonction **(20)** entre l'aile **(11)** et l'âme **(10).**

10. Chemin **(1)** de câbles comprenant au moins une paire de dalles **(2)** en treillis de fil, assemblées au moyen d'une éclisse **(3)** selon l'une des revendications précédentes.

## Patentansprüche

1. Verbindungslasche (3) zur Montage einer ersten Platte (2) und einer zweiten Platte (2) einer Kabelrinne aus Drahtgitter, wobei diese Verbindungslasche (3) die Form eines einteiligen Stücks mit allgemein U-förmigem Profil aufweist und Folgendes aufweist:
- einen mittleren Kern (10), der mit einer Mittelwand (12), die eine Innenseite (14) und eine Außenseite (13) aufweist, und zwei Querrändern (15) versehen ist, die an der Mittelwand (12) beidseitig davon entlanglaufen, wobei diese Querränder (15) auf der Seite der Außenseite (13) der Mittelwand (12) rechtwinklig umgebogen sind,
- zwei Flügel (11), die sich beiderseits des Kerns (10) im Wesentlichen rechtwinklig von Letzterem erstrecken, wobei jeder Flügel (11) mit einer Seitenwand (16), die eine Innenseite (17) und eine Außenseite (18) aufweist, und mit zwei Seitenrändern (19) versehen ist, die an der Seitenwand (16) beidseitig davon entlanglaufen, wobei diese Seitenränder (19) auf der Seite der Außenseite (18) der Seitenwand (16) rechtwinklig umgebogen sind,
wobei diese Verbindungslasche (3) **dadurch gekennzeichnet ist, dass**:
- die Mittelwand (12) und die Seitenwände (16) flach sind;
- der mittlere Kern (10) mit einer mittleren Zunge (21) ausgestattet ist, die sich vorspringend von der Mittelwand (12) auf der Seite ihrer Außenseite (13) erstreckt, wobei diese mittlere Zunge (21) geeignet ist, mit einem mittleren Abschnitt (6) eines Endschussfadens (5E) einer Platte (2) einer Kabelrinne in Eingriff zu kommen;
- jeder Flügel (11) mit einer seitlichen Zunge (25) ausgestattet ist, die sich vorspringend von der Seitenwand (16) auf der Seite ihrer Außenseite (18) erstreckt, wobei diese seitliche Zunge (25) geeignet ist, mit einem seitlichen Abschnitt (7) des Endschussfadens (5E) in Eingriff zu kommen.

2. Verbindungslasche (3) nach Anspruch 1, **dadurch gekennzeichnet, dass** der mittlere Kern (10) mit einer mittleren Öffnung (22) versehen ist, die in der Mittelwand (12) gebildet ist und einen seitlichen Rand (23) aufweist, von dem die mittlere Zunge (21) vorsteht.

3. Verbindungslasche (3) nach Anspruch 2, **dadurch gekennzeichnet, dass** die mittlere Öffnung (22) zwei seitliche Ränder (23) aufweist, von jeweils jedem von denen eine mittlere Zunge (21) vorsteht.

4. Verbindungslasche (3) nach einem der vorhergehenden Ansprüche, **dadurch gekennzeichnet, dass** jeder Flügel (11) mit einer seitlichen Öffnung (25) versehen ist, die in der Seitenwand (16) gebildet ist und einen Längsrand (29) aufweist, von dem die seitliche Zunge (25) vorsteht.

5. Verbindungslasche (3) nach Anspruch 4, **dadurch gekennzeichnet, dass** die seitliche Öffnung (25) einen oberen Längsrand (28), der in der Nähe eines freien Endes (27) des Flügels (11) angeordnet ist, und einen unteren Längsrand (29) aufweist, von dem die seitliche Zunge (25) vorsteht.

6. Verbindungslasche (3) nach einem der vorhergehenden Ansprüche, **dadurch gekennzeichnet, dass** jeder Querrand (15) zwei mittlere Kerben (31) definiert, die jeweils geeignet sind, mit einem Grundkettfaden (4B) einer Platte (2) einer Kabelrinne in Eingriff zu kommen.

7. Verbindungslasche (3) nach einem der vorhergehenden Ansprüche, **dadurch gekennzeichnet, dass** jeder Seitenrand (19) eine seitliche Kerbe (32) definiert, die geeignet ist, mit einem seitlichen Kettenfaden (4D) einer Platte (2) einer Kabelrinne in Eingriff zu kommen.

8. Verbindungslasche (3) nach Anspruch 7, **dadurch gekennzeichnet, dass** jeder Seitenrand (19) eine Kante (33) aufweist, die sich schräg von der Kerbe (32) bis in die Nähe einer Verbindung (20) zwischen dem Flügel (11) und dem Kern (10) erstreckt.

9. Verbindungslasche (3) nach einem der vorhergehenden Ansprüche, **dadurch gekennzeichnet, dass** sich die Querränder (15) und die Seitenränder (19) kontinuierlich an eine Verbindung (20) zwischen dem Flügel (11) und dem Kern (10) anschließen.

10. Kabelrinne (1), umfassend mindestens ein Paar Platten (2) aus Drahtgitter, die durch eine Verbindungslasche (3) nach einem der vorhergehenden Ansprüche zusammengefügt sind.

## Claims

1. Splice plate (3) for assembling a first section (2) and a second section (2) of a wire mesh cable tray, this splice plate (3) taking the form of a one-piece part having a generally U-shaped profile and comprising:
- a central web (10) provided with a central wall (12) having an inner face (14) and an outer face (13), and provided with two transverse flanges (15) which extend along the length of the central wall (12) on either side of the latter, these transverse flanges (15) being bent perpendicular to the side of the outer face (13) of the central wall (12),
- two arms (11) which extend on either side of the web (10), essentially at right angles therefrom, each arm (11) being provided with a lateral wall (16) having an inner face (17) and an outer face (18), and provided with two lateral flanges (19) which extend along the length of the lateral wall (16) on either side of the latter, these lateral flanges (19) being bent perpendicular to the side of the outer face (18) of the lateral wall (16), this splice plate (3) being **characterized in that**:
- the central wall (12) and the lateral walls (16) are flat;
- the central web (10) is provided with a central tab (21) which projects from the central wall (12), on the side of the outer face (13) of the latter, this central tab (21) being designed to engage with a central portion (6) of an end weft wire (5E) of a cable tray section (2);
- each arm (11) is provided with a lateral tab (25) which projects from the lateral wall (16), on the side of the outer face (18) thereof, this lateral tab (25) being designed to engage with a lateral portion (7) of the end weft wire (5E).

2. Splice plate (3) according to Claim 1, **characterized in that** the central web (10) is provided with a central opening (22) created in the central wall (12) and having a lateral edge (23) whence projects the central tab (21).

3. Splice plate (3) according to Claim 2, **characterized in that** the central opening (22) has two lateral edges (23) from each of which there projects a central tab (21).

4. Splice plate (3) according to one of the preceding claims, **characterized in that** each arm (11) is provided with a lateral opening (25) created in the lateral wall (16) and having a longitudinal edge (29) whence projects the lateral tab (25).

5. Splice plate (3) according to Claim 4, **characterized in that** the lateral opening (25) has an upper longitudinal edge (28) located close to a free end (27) of the arm (11), and a lower longitudinal edge (29) whence projects the lateral tab (25).

6. Splice plate (3) according to one of the preceding claims, **characterized in that** each transverse flange (15) defines two central notches (31), each designed to engage with a warp wire (4B) of the bottom of a cable tray section (2).

7. Splice plate (3) according to one of the preceding claims, **characterized in that** each lateral flange (19) defines a lateral notch (32) designed to engage with a warp wire (4D) of the side of a cable tray section (2).

8. Splice plate (3) according to Claim 7, **characterized in that** each lateral flange (19) has an edge face (33) which extends obliquely from the lateral notch (32) to close to a junction (20) between the arm (11) and the web (10).

9. Splice plate (3) according to one of the preceding claims, **characterized in that** the transverse flanges (15) and the lateral flanges (19) are connected in a continuous manner at a junction (20) between the arm (11) and the web (10).

10. Cable tray (1) comprising at least one pair of wire mesh sections (2) assembled by means of a splice plate (3) according to one of the preceding claims.
